# EUROPÄISCHE PATENTSCHRIFT

(11) **EP 2 247 541 B1**
(45) Veröffentlichungstag und Bekanntmachung des Hinweises auf die Patenterteilung: **28.09.2011**
(21) Anmeldenummer: 08872942.1
(22) Anmeldetag: 24.11.2008
(51) Int. Cl.: C03B 11/12

(54) **VORRICHTUNG ZUR HERSTELLUNG VON GEGENSTÄNDEN AUS GLAS DURCH HEISSFORMEN UND HERSTELLUNGSVERFAHREN**
DEVICE FOR PRODUCING OBJECTS MADE OF GLASS BY HOT FORMING, AND PRODUCTION METHOD
DISPOSITIF DE FABRICATION D OBJETS EN VERRE PAR MOULAGE À CHAUD, ET PROCÉDÉ DE FABRICATION

(30) Priorität: 28.02.2008 DE 102008011528
(43) Veröffentlichungstag der Anmeldung: 10.11.2010
(73) Patentinhaber: Fraunhofer-Gesellschaft zur Förderung der angewandten Forschung e.V., 80686 München (DE)
(72) Erfinder: GREMMELSPACHER, Matthias, 79106 Freiburg (DE); KLEER, Günter, 79256 Buchenbach (DE); MANNS, Peter, 79098 Freiburg (DE)
(74) Vertreter: Goeden, Christian
(86) Internationale Anmeldenummer: PCT/EP2008/009926
(87) Internationale Veröffentlichungsnummer: WO 2009/106110

(56) Entgegenhaltungen:
- DE-A1- 3 729 281
- JP-A- 6 072 725
- JP-A- 2002 128 534
- JP-A- 2004 115 280

## Beschreibung

Die Erfindung betrifft eine Vorrichtung und ein Verfahren zur Herstellung von Gegenständen aus Glas durch Heißformen, d.h. Pressen oder Prägen des Glases im zähplastischen Zustand.

Es sind Vorrichtungen zum Heißformen von Glas bekannt, bei denen der Formgebungsprozess im Wesentlichen isotherm durchgeführt wird, d.h. Glas und beide Pressstempel werden im Wesentlichen auf gleiche Temperatur gebracht und auch im Verlauf des Umformvorgangs auf gleicher Temperatur gehalten. Dieser isotherme Zustand wird dadurch erreicht, dass die gesamte Umgebung des umzuformenden Glasrohlings zusammen mit beiden Formwerkzeugen mittels einer ausgedehnten Heizvorrichtung auf die Arbeitstemperatur aufgeheizt wird und nach der Umformung mittels dieser Heizvorrichtung auch wieder abgeheizt wird, d.h. mit einer bestimmten Rate auf eine niedrigere Temperatur gebracht wird. Eine solche Vorrichtung zum isothermen Heißformen mit einer gemeinsamen Heizvorrichtung für Ober- und Unterstempel und Glasrohling ist aus der US 5 346 522 und der US 6 003 339 bekannt. Eine gezielte und variable Beheizung der einzelnen Funktionsflächen während des Umformvorgangs ist bei dieser Vorrichtung nicht möglich, da die Funktionsflächen von Ober- und Unterstempel nur durch eine einzige Heizvorrichtung beheizt werden.

Auch in der DE-OS 2 639 259 ist ein Heißformungsverfahren beschrieben, bei dem isotherm gepresst wird, d.h. vor Beginn des Pressens werden der Glasrohling und die auf ihn einwirkenden Teile der Presse auf im Wesentlichen gleiche Temperaturen gebracht, und es wird in einem Endabschnitt des Pressens die Temperatur der Pressform und des darin weiter unter Druckbelastung gehaltenen Glaspresslings so allmählich abgekühlt, dass die Temperaturen der Pressform und des Glaspresslings auch beim Abkühlen im Wesentlichen gleich bleiben.

Das isotherme Pressen zeichnet sich dadurch aus, dass thermische Spannungen in den formnahen Bereichen des Glases und beim Abkühlen resultierende Mikroverschiebungen zwischen Glasoberfläche und Formoberfläche, durch die es zu Oberflächenfehlern des Glaspresskörpers kommen kann, vermieden werden.

Auch bei anderen bekannten Verfahren ähnlicher Art wird aus den dargelegten Gründen ein isothermes Pressen angewandt, so zum Beispiel nach der EP 19 342 im Temperaturbereich des American softening point (10^{7.6} dPas) oder nach der EP 78 658.

Allerdings sind für das isotherme Pressen lange Presszeiten erforderlich, die vom Start des Verformungsvorgangs bis zur Entnahme aus der Form 10 Minuten und mehr betragen können.

Es sind andererseits auch Verfahren zum Pressen von Glasformkörpern für optische Zwecke bekannt, bei denen in herkömmlicher Weise ein genügend erhitzter Glasrohling zwischen erheblich kühleren Pressform-Funktionsflächen gepresst wird (DE-PS 397427), ohne dass auf bestimmte Beziehungen zwischen den Temperaturen des Glasrohlings und der Pressform-Funktionsflächen geachtet worden wäre. Die auf diese Weise hergestellten gepressten Glasformkörper, insbesondere Linsen, sind für präzisionsoptische Anwendungen und bildgebende Systeme nicht geeignet und werden z.B. in der Beleuchtungsoptik für Kondensorlinsen verwendet.

Bei den neueren Verfahren wird aber gerade das Pressen von Glasformkörpern für bildgebende Optiksysteme angestrebt und die Entwicklung der Technik hat gezeigt, dass es dafür auch auf die Einhaltung bestimmter Temperaturen ankommen kann. So ist insbesondere in der schon genannten EP 78 658 ein Verfahren beschrieben, bei dem das Pressen bei einer so hohen Viskosität des Glases, d.h. bei so niedrigen Temperaturen, erfolgt, dass der Glasrohling in akzeptablen Presszeiten nur minimal verformt werden kann und deshalb schon recht genau in der für den zu fertigenden Pressformkörper gewünschten Gestalt vorliegen muss. Diese Notwendigkeit, genau vorgearbeitete Glasrohlinge zu verwenden, erhöht den erforderlichen Aufwand. Die niedrigen Presstemperaturen erfordern lange Presszeiten und hohe Pressdrücke, so dass das Verfahren leicht unwirtschaftlich wird und/oder zu fehlerhaften Produkten führen kann.

Weiterhin sind nicht-isotherme Verfahren bekannt, bei denen zu Beginn des Pressvorgangs Ober- bzw. Unterstempel höhere oder niedrigere Temperaturen aufweisen als der Glasrohling. Die nicht-isothermen Prozesse können weitaus schneller durchgeführt werden, insbesondere wenn die Temperatur des Glasrohlings zu Beginn des Pressvorgangs deutlich über T_{g} liegt und die Temperatur des Werkzeugs niederer gehalten wird.

Bei der aus der DE 37 29 281 A1 bekannten Pressform werden Unter- und Oberstempel mit separaten Heizeinrichtungen erhitzt, anschließend werden die Stempel zusammengefahren und der Pressvorgang eingeleitet, wobei während des Pressens die Temperaturen von Ober- und Unterstempel abgesenkt werden. Unterer und oberer Pressstempel sind hierbei modular aufgebaut und bestehen jeweils aus einem Tragkörper und einem den Tragkörper aufnehmenden Grundkörper. Die Aufheizung von Oberstempel und Unterstempel kann über separate Heizungen erfolgen, also je eine den Oberstempel und eine den Unterstempel zylinderförmig umgebende Heizvorrichtung. Weiterhin ist jeweils eine steuerbare Heizeinrichtung in jedem der beiden wärmeleitenden Tragkörper vorgesehen. Der Glasrohling kann sowohl über die Heizung des Tragkörpers als auch außerhalb der Pressform vorgeheizt werden.

Nachteilig an dem nicht-isothermen Pressen ist, dass es infolge überhöhter Temperaturen leicht zum Verkleben von Glas und Form und somit zu irreparablen Schäden der Form kommen kann. Nachteilig sind auch die schlechte Reproduzierbarkeit und die mangelnde Gleichmäßigkeit der Konturen der hergestellten Glasformkörper.

Aus der JP 06072725 A und der JP 2002128534 A ist ein Presswerkzeug mit einer radial umgebenden Heizeinrichtung bekannt. Die Heizeinrichtung liegt unmittelbar am Presswerkzeug an. Daher weist die Heizeinrichtung etwa denselben Innendurchmesser auf wie der freie Durchmesser der optischen Komponente, welche mit der Vorrichtung hergestellt werden soll. Dies führt zu einem radialen Temperaturgradient, welcher die Qualität der hergestellten Glasformlinge beeinträchtigt.

Die JP 2004115280 A offenbart eine Vorrichtung zur Herstellung von Gegenständen aus Glas, bei welcher die Heizeinrichtung beabstandet zum Presswerkzeug bzw. dessen Tragkörper angeordnet ist. Weiterhin weist die Pressform denselben Durchmesser auf wie der Grundkörper, welcher die Pressform aufnimmt. Dadurch müssen in jedem Presszyklus große thermische Lasten aufgeheizt und abgekühlt werden, so dass lange Zykluszeiten entstehen. Der Erfindung liegt die Aufgabe zugrunde, die nicht-isothermen Glasherstellungsverfahren und Vorrichtungen dahingehend zu verbessern, dass sich die geformten Produkte ohne Verkleben und mit gleich bleibender Qualität kostengünstig herstellen lassen.

Diese Aufgabe wird dadurch gelöst, dass jeweils eine die Funktionsflächen der Tragkörper im Wesentlichen radial umgebende Heizeinrichtung an jedem Tragkörper vorgesehen ist, die zur direkten Beheizung der jeweiligen Funktionsflächen dient.

Durch die direkte Beheizung der Funktionsflächen kann ein schnellerer Eintrag der erforderlichen Wärmemenge in die Formwerkzeuge erfolgen und dabei die Gefahr des Überhitzens der Funktionsflächen wirksam verhindert werden, und es werden kürzere Taktzeiten erreicht.

Ein wesentliches Merkmal der Erfindung ist die radiale Anordnung der Heizung nahe der Funktionsflächen und die Ausführung derselben jeweils als separat steuerbare Heizvorrichtung für jeden Pressstempel, d.h. für den unteren Pressstempel und für den oberen Pressstempel.

Hierdurch wird ermöglicht, für die Formgebung von Glaspresslingen wie z.B. von optischen Linsen mit ungleichen Flächenkonturen auf den beiden Seiten und den daher erforderlichen ungleich großen, in vielen Fällen sogar stark asymmetrischen Umformgraden, einen unterschiedlich hohen Wärmeeintrag an beiden Funktionsflächen zu erreichen und während des Pressvorgangs entsprechend der im weiteren Verlauf noch erforderlichen Umformung gezielt zu regeln, ohne dabei die Temperaturen in den Funktionsflächen über die Grenze zum Kleben hinaus zu erhöhen.

Um eine genaue Temperaturregelung der funktionsflächennahen Heizungen zu gewährleisten, ist in jedem Tragkörper jeweils entlang der axialen Symmetrieachse nahe der Funktionsfläche ein Temperaturmesssensor eingesetzt. Hierdurch ist eine schnelle und zuverlässige Temperaturbestimmung und -regelung nahe der Funktionsfläche möglich.

Erfindungsgemäß werden die Heizvorrichtungen zur Beheizung der Funktionsflächen bzw. des zu verpressenden Glasrohlings in einem geringen Abstand von den zu erhitzenden Tragkörpern/Funktionsflächen positioniert. Unter einem geringen Abstand wird verstanden, dass der Durchmesser der rotationssymmetrischen Heizvorrichtung das Zweifache bis Fünffache des Durchmessers der Funktionsflächen beträgt. Die Beheizung ist also nicht an der Kammerwand angebracht und somit weit entfernt von dem zu verpressenden Glas, was zu geringerem Wärmeeintrag und damit zu größeren zeitlichen Verzögerungen bei der Temperatureinstellung der Funktionsflächen führen würde.

Durch die Anordnung der Heizvorrichtungen in der Nähe der Funktionsflächen und beschränkt auf die Nähe der Funktionsflächen kann die für die Umformung erforderliche Wärmemenge schnell und sehr gezielt dem Glasrohling und den Funktionsflächen zugeführt werden, ohne dass der den jeweiligen Tragkörper aufnehmende Grundkörper insgesamt auf die in den Funktionsflächen für die Umformung des Glases erforderliche hohe Temperatur erhitzt und nach der Beendigung des Umformvorgangs auch wieder abgekühlt werden muss, um den geformten Glaspressling aus der Pressform zu entnehmen. Durch die erfindungsgemäße lokalisierte Beheizung wird die Zeitdauer für das Erhitzen und Abkühlen der Funktionsschicht im Bereich der Funktionsflächen verringert und die Prozessdauer für die einzelnen Presszyklen im Produktionsablauf dadurch erheblich verkürzt.

Durch die erfindungsgemäße Anordnung der Heizelemente wird eine direkte Beheizung der Funktionsflächen und des Glasrohlings erreicht. Die bislang erforderliche Wärmeleitung vom Grundkörper über weitere Grenz- und Kontaktflächen in den Funktionsflächenbereich und die damit verbundene große Trägheit der Beheizung und die zeitlichen Schwankungen der Temperatur der Funktionsflächen als Folge von Veränderungen der Wärmeleitungsbedingungen in den Grenz- und Kontaktflächen bei den nicht-isotherm arbeitenden Pressstempeln fallen fort und die Steuermöglichkeit der im Glas und im unmittelbaren Funktionsflächenbereich einwirkenden Wärme wird entscheidend verbessert.

Durch die erfindungsgemäße Art der Beheizung kommt es auch nicht mehr zu dem aus dem Stand der Technik bekannten Verkleben der Form und zu Mängeln in der Gleichmäßigkeit und Reproduzierbarkeit. Auch die Abkühlung des gepressten Glaskörpers lässt sich durch die erfindungsgemäße Anordnung zuverlässiger und mit hoher Geschwindigkeit steuern.

Vorzugsweise ist die Heizung so ausgeführt, dass eine funktionsflächennahe Heizung außerhalb der Tragkörper nahe deren Außenflächen diese radial umgebend angeordnet ist mit einem definierten Überstand über die Oberkante der Funktionsfläche, so dass mit dieser Heizvorrichtung gleichzeitig auch der Glasrohling beheizt wird.

Die Heizung für die Funktionsflächen/Tragkörper ist vorzugsweise eine Strahlungsheizung, insbesondere ein flächiger Heizstrahler mit großer Emissionsfläche, ein diffus oder flächig wirkender Lampenheizer, eine elektrische Widerstandsheizung oder eine heiße Gasströmung oder eine Anordnung von mehreren punktförmigen Infrarot-Strahlungsquellen.

Wichtig ist, dass der Wärmeeintrag im Wesentlichen radialsymmetrisch erfolgt, d.h. dass die Heizvorrichtungen die Funktionsfläche an dem Tragkörper wenigstens teilweise umschließen. Über die Heizeinrichtungen der Funktionsflächen kann ebenfalls eine Beheizung des Glasrohlings bewirkt werden.

Zusätzlich zu der Erhitzung des Glasrohlings über die Heizungen der Funktionsflächen kann auch wenigstens eine Heizeinrichtung für den Glasrohling vorgesehen sein, die diesen ebenfalls im Wesentlichen radialsymmetrisch umgibt. Diese wenigstens eine Heizeinrichtung kann in Form eines flächigen Heizstrahlers mit großer Emissionsfläche oder einer Anordnung von mehreren punktförmigen IR-Strahlungsquellen ausgebildet sein, als Laserstrahl, durch Mikrowellen oder durch eine oder mehrere Flammen.

Weiterhin kann eine Heizeinrichtung am Grundkörper auf der Basis eines Widerstandsheizers, eines flächigen Heizstrahlers, eines diffus oder flächig fokussiert wirkenden Strahlungsheizers oder einer heißen Gasströmung vorgesehen sein.

Die Heizvorrichtungen werden während der einzelnen Presszyklen getrennt voneinander angesteuert und beheizt.

Der Tragkörper kann auch aus mehreren Teilen, beispielsweise einer Tragschicht und dem eigentlichen Tragkörper, aufgebaut sein.

Im Rahmen der vorliegenden Erfindung wurde festgestellt, dass besonders hochwertige Glasprodukte erhalten werden, wenn bestimmte geometrische Bedingungen in Bezug auf den Aufbau und die Dimensionierung von Grund- und Tragkörper und der Größe der herzustellenden Glaslinsen erfüllt sind.

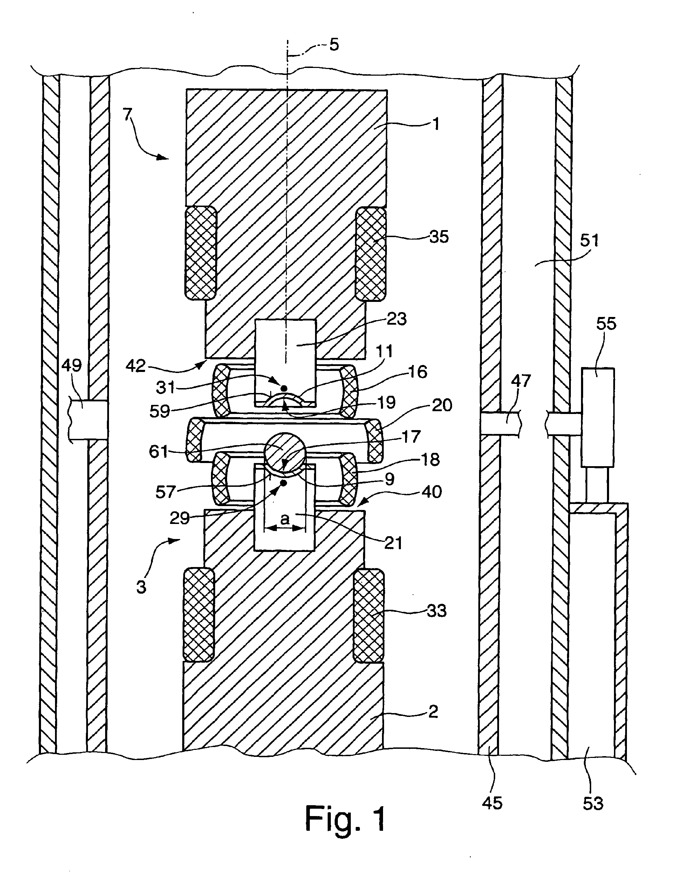

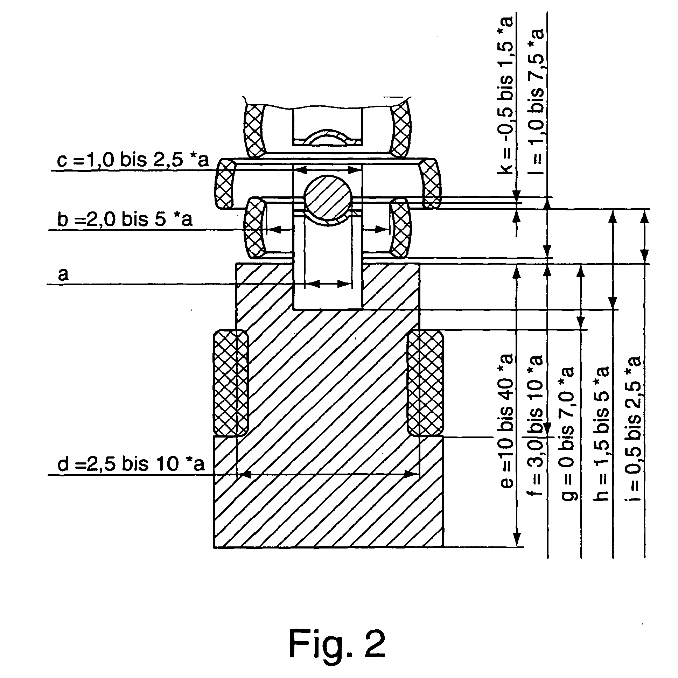

Referenzmaß ist der radiale Durchmesser des geformten Glaskörpers senkrecht zur Achse der Pressvorrichtung, der in den zugehörigen Figuren 1 und 2 mit »a« bezeichnet wird. Er bezieht sich im engeren Sinn auf den Durchmesser der optisch wirksamen Funktionsfläche der fertigen Glas-Komponente. Das Maß »a« bezeichnet den freien optischen Durchmesser der Linse, das ist der Teil der Linse, der für die optische Abbildung entscheidend ist, und für den vom Optik-Design her entsprechende Spezifikationen für die Konturgenauigkeit und Oberflächengüte gefordert werden. Dabei hat sich die Stärke der Krümmung der optischen Fläche als nahezu unerheblich herausgestellt.

Bezüglich der Abmessungen des Tragkörpers werden folgende Maße bevorzugt: Der Durchmesser c des Tragkörpers in Figur 2 beträgt vorzugsweise das 1,0 bis 2,5-fache von a und die Abmessung b der funktionsflächennahen Heizung beträgt das 2,0 bis 5,0-fache von a. Hierdurch wird erreicht, dass der Temperaturgradient in radialer Richtung in der am Tragkörper ausgebildeten Funktionsfläche zu keiner Zeit unzulässig groß werden kann, so dass auch bei schneller Aufheizung der Funktionsflächen durch sehr großen Wärmeeintrag bei hoher Heizleistung der funktionsflächennahen Heizvorrichtung keine unzulässig großen Konturabweichungen und schädlich hohe Spannungen bei der Umformung des Glasrohlings entstehen können.

Die Höhe h des Tragkörpers beträgt vorzugsweise das 1,5 bis 5,0-fache von a und ermöglicht damit, die Wärmekapazität der Tragkörper auf die mit dem vorgeheizten Glasrohling in die Funktionsschicht eingetragene Wärmemenge anzupassen. Dadurch wird erreicht, dass beim ersten Kontakt weder der heiße Glasrohling zu stark abgekühlt wird, was zu Rissen in der Glasoberfläche führen kann, noch dass die Funktionsfläche zu stark erhitzt wird, was zum Kleben des Glases führen kann.

Der Überstand i des Tragkörpers über den Grundkörper beträgt vorzugsweise das 0,5 bis 2,5-fache von a, um einen ausreichenden Wärmeeintrag der funktionsflächennahen Heizung in den Tragkörper zu erreichen.

Der Überstand k der funktionsflächennahen Heizung beträgt das -0,5 bis 1,5-fache von a, zum Einstellen der effektiv auf den Glaskörper wirkenden Strahlungsfläche.

Die Höhe I der funktionsflächennahen Heizung beträgt das 1,0 bis 7,5-fache von a, damit eine ausreichende Strahlungsfläche zum Beheizen des Tragkörpers verfügbar ist.

Erfindungsgemäß ist der Aufbau des Grundkörpers so ausgeführt, dass der Durchmesser d im Übergangsbereich zwischen Grund- und Tragkörper der senkrecht zur Pressrichtung ausgebildeten Stirnfläche des Grundkörpers in einer definierten geometrischen Beziehung zur Linearabmessung »a« der am Tragkörper gebildeten Funktionsfläche steht, nämlich derart, dass der Durchmesser d des Grundkörpers im Übergangsbereich etwa das 2 bis 10-fache der Linearabmessung der optisch wirksamen Funktionsfläche beträgt.

Bezüglich der Abmessungen des Grundkörpers werden folgende Maße bevorzugt: Die Höhe e des Grundkörpers beträgt vorzugsweise das 10 bis 40-fache von a. Hierdurch wird erreicht, dass der Temperaturgradient in axialer Richtung zwischen der am Tragkörper ausgebildeten Funktionsfläche, die für die Umformung des Glases auf eine hohe Temperatur erhitzt werden muss, und der maschinenseitigen Fläche des Grundkörpers, die auf einer wesentlich niedrigeren Temperatur durch entsprechende Kühlvorrichtungen gehalten werden muss, nicht zu groß wird. Die beheizte Höhe f des Grundkörpers beträgt vorzugsweise das 3 bis 10-fache von a und der unbeheizte Überstand g des Grundkörpers beträgt das 0 bis 7-fache von a, wodurch eine angepasste Wärmesenke für die kontrollierte Abkühlung des Glaskörpers nach dem Abschluss des Umformvorgangs erreicht wird.

Die hohe Qualität der hergestellten optischen Linsen und speziell die hohe Konturgenauigkeit der heißgeformten Glasoberflächen wird insbesondere durch geringe (flache) Temperaturgradienten in der Funktionsfläche des Tragkörpers und damit im umgeformten Glas, und zwar insbesondere in radialer Richtung, erreicht.

Der geringe Temperaturgradient in der Funktionsschicht wird erfindungsgemäß dadurch erreicht, dass der Wärmeeintrag aus dem Tragkörper in die Funktionsschicht in axialer Richtung erfolgt. Durch Wärmeleitung innerhalb des Tragkörpers wird der radiale Temperaturverlauf homogenisiert.

Mit Hilfe des schnellen Eintrags der erforderlichen Wärmemengen in den Glaskörper und in die Funktionsfläche des Tragkörpers werden erfindungsgemäß kurze Taktzeiten und damit geringere Produktionskosten für die geformten optischen Glaslinsen erreicht.

Damit eine hohe Oberflächengüte der heißgeformten Funktionsflächen der Glaskomponenten erzielt werden können, ist es erforderlich, Glasrohlinge mit mindestens ebenso hoher Oberflächenqualität einzusetzen.

Es wird deshalb vorzugsweise ein Glasrohling mit einer höchstmöglichen Oberflächenqualität verwendet, etwa wie sie bei ungestörtem Glas im zähflüssigen Zustand vorliegt. Eine solche höchste Oberflächenqualität kann in Ausgestaltung der Erfindung in einfacher Weise dadurch sichergestellt werden, dass man einen Glasrohling verwendet, dessen für die optisch wirksamen Flächen des Glasformkörpers vorgesehene Oberflächenbereiche durch thermisches Spalten erzeugt worden sind.

Wesentlich ist auch, dass alle Teile einschließlich des Glasrohlings vor dem Pressvorgang bestmöglich gereinigt werden.

In einer weiteren Ausgestaltung der Erfindung ist vorgesehen, dass das Verfahren in einem Reinraum durchgeführt wird, in welchem ein Teilchengehalt in der Luft von unter 10⁴ pro m³ vorliegt. Es hat sich gezeigt, dass sich dadurch das Auftreten von bisher unerklärlichen Mikro-Fehlstellen in der Oberfläche des hergestellten Glaspresskörpers praktisch vollständig vermeiden lässt.

Nach einer weiteren Ausgestaltung der Erfindung wird während des Pressens in der Umgebung der Pressform ein Gesamtdruck von weniger als 1 Pa aufrechterhalten. Dadurch werden mögliche chemische Wechselwirkungen zwischen den bei dem Verfahren verwendeten Materialien und gasförmigen Stoffen weitgehend vermieden. Besonders zweckmäßig ist es, wenn während des Pressens in der Umgebung der Pressform ein Partialdruck an reduzierenden oder oxidierenden Gasen, insbesondere Sauerstoff, von weniger als 10⁻¹ Pa oder vorzugsweise sogar weniger als 10⁻³ Pa eingehalten wird. In diesem Zusammenhang ist zu beachten, dass auch reduzierende Gase störend wirken können, z.B. bei optischen Gläsern mit sehr hohen optischen Brechwerten eine Dunkelfärbung der Oberfläche durch Reduktion von Schwermetalloxiden zu metallischem Schwermetall hervorrufen können.

In Untersuchungen hat sich gezeigt, dass eine gezielt nicht-isotherme Verfahrensführung wirksam dazu beiträgt, ein unerwünschtes Haften zwischen dem Glaspressling und den Funktionsflächen auszuschließen. Deshalb ist die Anwendung einer Temperaturdifferenz zwischen dem Glasrohling und der Pressform vorgesehen, wobei diese Temperaturdifferenz so bemessen ist, dass zwar das Ablösen des Glaspresslings von den Funktionsflächen der Pressform begünstigt wird, die Temperaturdifferenz aber andererseits nicht so groß ist, dass unerwünschte Inhomogenitäten in dem Glaspressling zu befürchten wären.

Hinsichtlich der Temperaturführung gilt, dass es zweckmäßig ist, zu Beginn des Pressens die Temperatur der Funktionsfläche in der Nähe der Glasübergangstemperatur T_{g} zu halten und den Glasrohling mit einer höheren Temperatur einzusetzen. Dies kann insbesondere beim Pressen von Glaslinsen mit großen geometrischen Unterschieden zwischen der Geometrie des Glasrohlings und der Endgeometrie des Glasformkörpers vorteilhaft sein, um eine hohe Pressgeschwindigkeit mit einer verhältnismäßig raschen Kühlung zu vereinigen. Andererseits ist es aber auch möglich, zu Beginn des Pressens die Temperatur des Glasrohlings mindestens gleich der Glasübergangstemperatur T_{g} zu halten und die Funktionsflächen auf eine höhere Temperatur einzustellen. Auf diese Weise kann in vielen Fällen, besonders beim Pressen bei einer hohen anfänglichen Viskosität des Glasrohlings, die Pressgeschwindigkeit erhöht werden.

Die beschriebenen besonderen Verfahrensweisen lassen sich insbesondere auch dann anwenden, wenn in der bekannten Weise der Glasrohling in einer Pressform mit zwei gegenüberliegenden Pressstempeln (die jeweils eine Funktionsfläche aufweisen) zu Beginn des Pressens auf einen der Pressstempel, meist auf den Unterstempel einer vertikal angeordneten Presse, gelegt wird. Es ist dann dementsprechend zweckmäßig, den Glasrohling zusammen mit diesem Pressstempel auf eine Temperatur zu bringen, die höher ist als die Temperatur des anderen Pressstempels. Insbesondere kann auf diese Weise die erfindungsgemäß vorgesehene Temperaturdifferenz dadurch angewandt werden, dass bei Verwendung einer Pressform mit zwei gegenüberliegenden Pressstempeln die Funktionsflächen der Pressstempel auf unterschiedlichen Temperaturen gehalten werden. Es ist zweckmäßig, diese Temperaturdifferenz bis zum Ende des Pressens aufrechtzuerhalten, damit das Ablösen des Glases von den Funktionsflächen erleichtert wird.

In einer besonders vorteilhaften Ausführungsform des Verfahrens werden die angewandten Temperaturdifferenzen auf den Viskositätsverlauf des zu pressenden Glases abgestimmt und betragen vorzugsweise mindestens 50K.

Um die Produktionsgeschwindigkeit zu erhöhen, ist es in Ausgestaltung der Erfindung zweckmäßig, wenn das Kühlen in der Pressform schon während der Verformung des Glases begonnen wird, und zwar vorzugsweise bereits in einer Anfangsphase des Umformvorgangs. Dies ist bei Vorliegen einer entsprechend hohen Anfangstemperatur ohne weiteres möglich. In diesem Zusammenhang ist darauf hinzuweisen, dass es bei dem erfindungsgemäßen Verfahren nicht erforderlich ist, bei sehr niedrigen Temperaturen und demgemäß hohen Glasviskositäten zu arbeiten; im Gegenteil können bei dem erfindungsgemäßen Verfahren alle Vorteile bezüglich Produktionsgeschwindigkeit ausgenutzt werden, die sich aus der Wahl einer verhältnismäßig hohen Anfangstemperatur des Glasrohlings ergeben.

Das Herausnehmen des Glaspresslings aus der Pressform kann frühzeitig erfolgen, sobald der Glaspressling eine genügend hohe Gestaltfestigkeit angenommen hat. Vorzugsweise wird der Glaspressling der Pressform entnommen, wenn er zumindest in der Nähe der Funktionsfläche eine Temperatur aufweist, die einer Viskosität des Glases von mindestens 10¹³ dPas entspricht.

Die erfindungsgemäße Pressform bietet besondere Vorteile hinsichtlich der Oberflächenqualität und Gestaltgenauigkeit der damit gepressten Glasformkörper auch unabhängig von der besonderen erfindungsgemäßen Verfahrensführung.

Für den wirtschaftlichen Einsatz eines Formgebungsverfahrens sind die Formgenauigkeit des Produktes und die Pressdauer von entscheidender Bedeutung. Eine niedrige Glasviskosität ermöglicht eine große Umformung des Glasrohlings bei sehr kurzer Pressdauer. Mit der Erfindung wird das Problem gelöst, dass in nachteiliger Weise Glas bei geringer Viskosität eine innige Verbindung mit dem Formwerkzeug eingeht und an der Formenoberfläche anklebt, so dass sich Werkzeug und Werkstück nicht mehr störungsfrei oder in wirtschaftlich zweckmäßiger Zeit trennen lassen. Die Erfindung erlaubt die Temperatur der Kontaktfläche in der Funktionsschicht so zu steuern, dass kein Kleben auftritt.

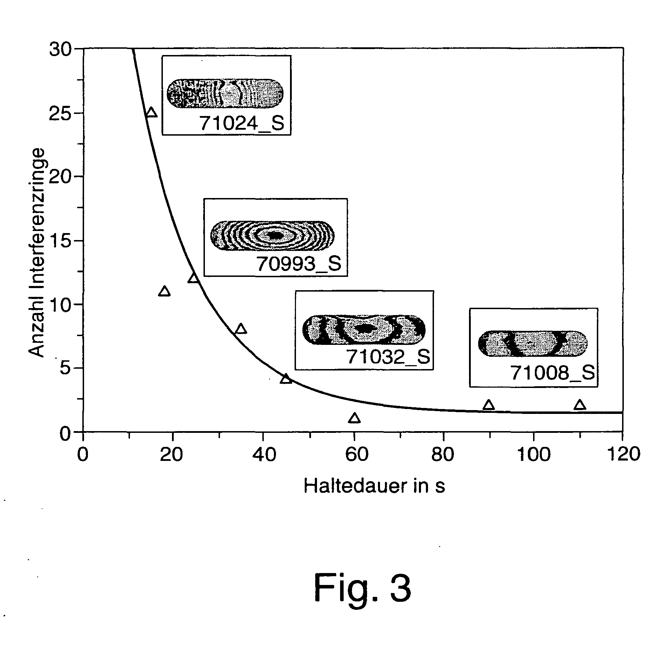

Die Abweichung der durch dieses Verfahren erzeugten Kontur der optisch wirksamen Oberfläche von der Sollkontur ist direkt abhängig von der Schließzeit bzw. Haltedauer des Glaspresslings in der Pressform. Das Diagramm in Figur 3 zeigt die Abhängigkeit der Abweichung der Oberflächenkontur gepresster Linsen von der Sollkontur der Linsen als Funktion der Formenschließzeit (Haltedauer) für einen gewählten Parametersatz (Formentemperaturen, Glastemperatur, Mittendicke der Glaslinsen, etc.).

Bei dem erfindungsgemäßen Verfahren zum Herstellen eines Glasformkörpers für präzisionsoptische, insbesondere abbildende Zwecke, mit der erfindungsgemäßen Vorrichtung wird ein Glasrohling eingesetzt, der bezüglich der gewünschten Gestalt des herzustellenden Glasformkörpers unbearbeitet ist und zumindest in den zur Bildung von optisch wirksamen Flächen dienenden Bereichen eine hohe Oberflächenqualität mindestens etwa entsprechend einer Feuerpolitur aufweist. Dabei wird der Glasrohling bei einer zum Pressen ausreichend hohen Temperatur in der Pressform gepresst und der hergestellte Glaspressling in der Pressform bis zum Erreichen einer ausreichenden Gestaltfestigkeit abgekühlt, dann aus der Pressform entnommen und durch Feinkühlen zu dem Glasformkörper fertig gestellt, wobei die heiße Pressform in einer Schutzgasatmosphäre oder Vakuum gehalten wird.

Mit dem erfindungsgemäßen Verfahren lassen sich beispielsweise optische Linsen für abbildende Optiken oder Beleuchtungsoptiken mit refraktiven sphärischen, asphärischen oder Freiform-Konturen, sowie Optikkomponenten mit diffraktiven Oberflächen oder mit einer Kombination aus refraktiven und diffraktiven Flächen, wie Bauteile für Endoskope, für Projektionssysteme und Bauteile zur Strahlformung bei Lasern sowie für Lichtlenkungs- und -verteilungssysteme und ebenso Komponenten, die als Abstandshalter, Justierelemente, Verkapselungen, Sensoren, Fluidführungssysteme, gegebenenfalls unter Anwendung eines Füge- oder auch Lötprozesses aus mehreren Einzelkomponenten dienen, herstellen. Die Erfindung wird nachfolgend anhand von Zeichnungen näher beschrieben.

Es zeigt:
- Figur 1: eine schematische Darstellung der Pressform im Schnitt,
- Figur 2: eine Teilansicht der Pressform mit den eingezeichneten geometrischen Größen a - I,
- Figur 3: die Abhängigkeit der Abweichung der Oberflächenkontur gepresster Linsen von der Sollkontur der Linsen als Funktion der Formenschließzeit und
- Figur 4: Angaben zur Herstellung einer Fokussierlinse.

Fig. 1 zeigt schematisch eine Pressform mit einem Unterstempel 3 und einem relativ dazu entlang einer vertikalen Achse 5 bewegbaren Oberstempel 7. Die Stempel 3, 7 umfassen jeweils einen Grundkörper 1, 2 und einen Tragkörper 21, 23. Aufeinander ausgerichtete dünne Funktionsschichten 9 bzw. 11 sind auf den Tragkörpern 21, 23 fest haftend aufgebracht. Diese bilden an ihren Außenflächen Funktionsflächen 17 bzw. 19, die der Oberflächengüte der optisch wirksamen Flächen und der Gestalt eines herzustellenden Glaspresskörpers unter Berücksichtigung der Wärmedehnungen entsprechen. Die Tragkörper 21 bzw. 23, die aus einem wärmeleitenden Material wie einem Metall oder einer Keramik bestehen, sind in Ausnehmungen der Grundkörper 1 bzw. 2 befestigt.

Die Funktionsflächen 17, 19 sind radial von jeweils einer Heizeinrichtung 16, 18 umgeben. Die Heizeinrichtungen 16, 18 dienen zur direkten Beheizung der Funktionsflächen 17, 19 insbesondere über Strahlungstransport.

In einem jeden Tragkörper 21, 23 ist entlang der Achse 5 zentrosymmetrisch (auf der Achse 5) nahe der Funktionsschicht 9, 11 ein Temperaturmesssensor 29, 31 vorgesehen.

Weiterhin ist eine radial den Glasrohling 61 umgebende Heizeinrichtung 20 vorgesehen, die der direkten Beheizung des Glasrohlings 61, insbesondere mittels Strahlungstransport dient.

Damit eine hohe Oberflächenqualität auf den gepressten Glasformkörpern erzielt wird, bestehen die Tragkörper 21, 23 aus strukturarmem Material, das amorph oder monokristallin oder polykristallin mit einer Korngröße kleiner als 0,5 Mikrometer ist. Auf diese Oberflächenbereiche 57 bzw. 59 sind Funktionsschichten 9 und 11 als unstrukturierte Dünnschichten aufgebracht, z.B. durch reaktives Sputtern, und haben eine gleichmäßige Dicke von unter 5 Mikrometer, z.B. 4 Mikrometer, und eine Rauheit von weniger als 0,1 Mikrometer, so dass die Funktionsflächen 17 und 19 genau die Gestalt der unterliegenden Oberflächenbereiche 57 bzw. 59 haben, jedoch etwaige vom Polieren verbliebene Mikro-Oberflächenfehler der Oberflächenbereiche 57 und 59 geglättet werden.

Die Funktionsschicht besteht aus einer keramischen Hartstoffschicht, die neben metalloiden Substanzen vorzugsweise Stickstoff enthält.

Auf den Außenseiten der Pressstempel 3 und 7 sind zusätzlich Heizeinrichtungen 33 bzw. 35, beispielsweise elektrische Heizdrähte, Induktionsheizeinrichtungen oder dergleichen, angeordnet.

Die Pressform ist in einem Gehäuse 45 angeordnet, das über Leitungen 47, 49 evakuiert oder mit einer beliebigen Gasatmosphäre gefüllt oder gespült werden kann. Das Gehäuse 45 ist in einem Reinraum 51 angeordnet, der über eine Schleuse 53 zugänglich ist. Eine Be- und Entlüftung 55 sorgt dafür, dass in dem Reinraum 51 Luft einer gewünschten Freiheit von Teilchen-Verunreinigungen, insbesondere weniger als 10⁴ Teilchen pro m³, vorliegt.

Die unter den Funktionsschichten 9 und 11 liegenden Oberflächenbereiche 57 bzw. 59 der Tragkörper 21, 23 sind möglichst genau und mit möglichst hoher Oberflächenqualität entsprechend den optisch wirksamen Flächen des herzustellenden Glaspresskörpers geformt, z.B. in der üblichen Weise durch Schleifen und Polieren.

Die Durchführung des Verfahrens kann entweder mit einem relativ kalten Glasrohling 61 erfolgen (Variante 1) oder mit einem in einer speziellen Vorrichtung vorgeheizten Glasrohling 61 (Variante 2).

Bei der Verfahrensvariante 1 wird der kalte Glasrohling 61 auf das heiße Formwerkzeug aufgelegt und nach einer Liegezeit von 5 bis 300 s, während der das Glas in der Form auf die gewünschte Temperatur erhitzt wird, umgeformt.

Zur Durchführung des Verfahrens nach Variante 1 werden die funktionsflächennahen Heizungen 16, 18 der Tragkörper 21, 23 gleichzeitig auch zur Erhitzung des Glasrohlings 61 genutzt.

Hierbei kann die funktionsflächennahe Heizung 16, 18 in Form eines flächigen Heizstrahlers, eines diffus oder flächig fokussiert wirkenden Lampenheizers oder einer heißen Gasströmung ausgeführt sein.

Als Heizung 33, 35 der Grundkörper 1, 2 kann ein Widerstandsheizer, ein flächiger Heizstrahler, ein diffus oder flächig fokussiert wirkender Lampenheizer oder eine heiße Gasströmung vorgesehen sein.

Die Heizeinrichtung 20 des Glasrohlings 61 kann durch einen Laserstrahl, durch Mikrowellen, durch fokussiert wirkende Lampenheizer oder eine heiße Gasströmung oder eine oder mehrere Flammen ausgeführt sein.

Bei der Verfahrensvariante 2 wird der Glasrohling 61 zunächst in einer separaten Heizvorrichtung auf eine Temperatur T3 erwärmt, die zwischen der unteren Grenztemperatur des Formgebungsintervalls T1 und der oberen Grenztemperatur des Formgebungsintervalls T2 liegt, wobei die Grenztemperaturen abhängig sind vom Temperaturverlauf der Viskosität der jeweils gewählten Glasart. Der vorgeheizte Glasrohling 61 wird mittels eines Transfersystems zur eigentlichen Pressvorrichtung verbracht und nach einer Liegezeit von 0 s bis 300 s umgeformt.

Zur Durchführung des Verfahrens nach Variante 2 ist zusätzlich außerhalb der eigentlichen Pressvorrichtung eine Vorformlingsheizung vorhanden, in der der Vorformling auf eine Temperatur T3 zwischen T1 und T2 erwärmt werden kann. Von der Vorformlingsheizung wird der Vorformling mittels eines Transfersystems zur eigentlichen Pressvorrichtung verbracht.

Die Heizung des Glasrohlings kann durch einen Laserstrahl, durch Mikrowellen, einen flächigen Heizstrahler, einen diffus oder fokussiert strahlenden Lampenheizer oder eine heiße Gasströmung erfolgen.

### Herstellung einer Fokussierlinse

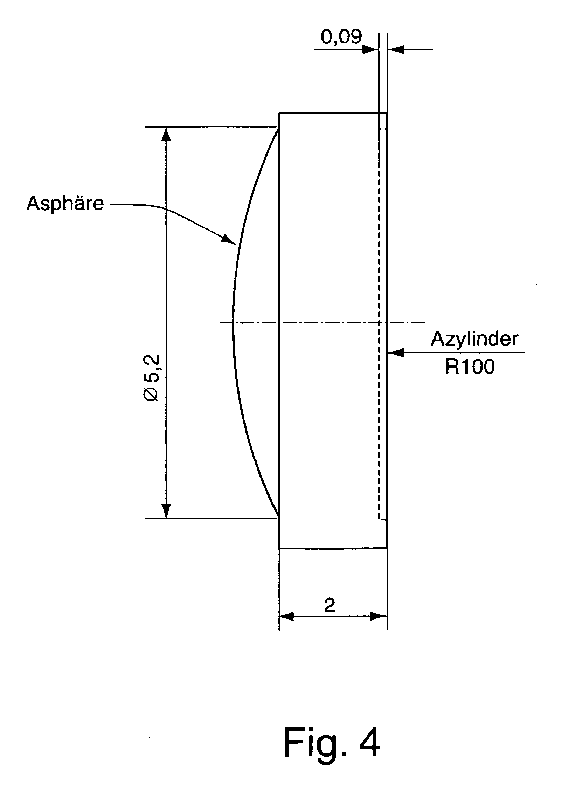

Mittels dem beschriebenen Verfahren in der beschriebenen Vorrichtung wird eine Fokussierlinse mit einer asphärischen Konvexfläche und einer azylindrischen Konkavfläche aus der Glasart F2 gemäß der Abbildung in Figur 4 hergestellt.

Der Gesamtdurchmesser der optischen Linse beträgt 6,0 mm, der freie Durchmesser der asphärischen Konvexfläche beträgt 5,2 mm. Der Krümmungsradius der asphärischen Konvexfläche im Zentrum beträgt 5,84 mm, der Krümmungsradius der azylindrischen Konvexfläche beträgt -100 mm im Zentrum, die Mittendicke der Linse beträgt 2,0 mm. Bei einer Umformdauer von 15 - 20 s wird mit dem beschriebenen Verfahren eine Konturgenauigkeit von besser als 330 nm P/V erreicht, die Variation der Mittendicke bei Serienpressungen ist kleiner als ±0,02 mm.

### Herstellung einer Meniskuslinse

Mittels der beschriebenen Vorrichtung werden Meniskuslinsen hergestellt, Durchmesser der Funktionsfläche 5 mm, Radius der konkaven Fläche 5 mm, Radius der konvexen Fläche 10 mm, Mittendicke 1 mm. Die erreichte Konturgenauigkeit ist besser als 300 nm, die Variation der Mittendicke ist kleiner als + 0,02 mm.

## Patentansprüche

1. Vorrichtung zur Herstellung optischer Komponenten (61) durch Heißformen, in welche ein Glasrohling (61) in einen Raum zwischen einem oberen Pressstempel (7) und einem unteren Pressstempel (3) einbringbar ist, wobei oberer (7) und unterer (3) Pressstempel modular aufgebaut sind und jeweils wenigstens einen Tragkörper (21, 23) und einen den Tragkörper (21, 23) aufnehmenden Grundkörper (1, 2) enthalten, welcher einen größeren Querschnitt (d) aufweist als der Tragkörper (21, 23), wobei an jedem Tragkörper (21,23) eine Funktionsfläche (17, 19) ausgebildet ist und die Vorrichtung jeweils eine getrennte Heizeinrichtung (16, 18) zum direkten Aufheizen der Funktionsflächen (17, 19) umfasst, welche die Funktionsflächen (17, 19) der Tragkörper (21, 23) im Wesentlichen radial umgeben, **dadurch gekennzeichnet, dass** der Innendurchmesser (b) der Heizeinrichtung (16, 18) das 2,0-fache bis das 5,0-fache des freien optischen Durchmessers a der optischen Komponente (61) beträgt.

2. Vorrichtung nach Anspruch 1, **dadurch gekennzeichnet, dass** wenigstens eine den Glasrohling (61) im Wesentlichen radial umgebende Heizeinrichtung (20) vorgesehen ist, die zur Beheizung des Glasrohlings (61) dient.

3. Vorrichtung nach einem der Ansprüche 1 oder 2, **dadurch gekennzeichnet, dass** in den Tragkörpern (21, 23) Temperaturmessvorrichtungen (29, 31) vorgesehen sind, insbesondere in der Achse (5) nahe der Funktionsflächen (17, 19).

4. Vorrichtung nach einem der Ansprüche 1 bis 3, **dadurch gekennzeichnet, dass** die Heizeinrichtungen (16, 18, 20) während des Presszyklus getrennt voneinander ansteuerbar und beheizbar sind.

5. Vorrichtung nach einem der Ansprüche 1 bis 4, **dadurch gekennzeichnet, dass** der Durchmesser c des Tragkörpers (21, 23) das 1,0- bis 2,5-fache des freien optischen Durchmessers a der der optischen Komponente (61) beträgt.

6. Vorrichtung nach einem der Ansprüche 1 bis 5, **dadurch gekennzeichnet, dass** die Höhe h des Tragkörpers (21, 23) das 1,5- bis 5,0-fache des freien optischen Durchmessers a der optischen Komponente (61) beträgt.

7. Vorrichtung nach einem der Ansprüche 1 bis 6, **dadurch gekennzeichnet, dass** der Überstand i des Tragkörpers (21, 23) über den Grundkörper (1, 2) das 0,5 bis 2,5-fache des freien optischen Durchmessers a der optischen Komponente (61) beträgt.

8. Vorrichtung nach einem der Ansprüche 1 bis 7, **dadurch gekennzeichnet, dass** der Überstand k der Heizeinrichtung (16, 18) das -0,5-fache bis 1,5-fache des freien optischen Durchmessers a der optischen Komponente (61) beträgt.

9. Vorrichtung nach einem der Ansprüche 1 bis 8, **dadurch gekennzeichnet, dass** die Höhe 1 der Heizeinrichtung (16, 18) das 1,0 bis 7,5-fache des freien optischen Durchmessers a der optischen Komponente (61) beträgt.

10. Vorrichtung nach einem der Ansprüche 1 bis 9, **dadurch gekennzeichnet, dass** der Durchmesser d der Stirnfläche (40, 42) des Grundkörpers (1, 2) im Übergangsbereich zwischen Grundkörper (1, 2) und Tragkörper (21, 23) das 2 bis 10-fache des freien optischen Durchmessers a der Linse (61) beträgt.

11. Vorrichtung nach einem der Ansprüche 1 bis 10, **dadurch gekennzeichnet, dass** die Höhe e des Grundkörpers (1, 2) das 10 bis 40-fache des freien optischen Durchmessers a der optischen Komponente (61) beträgt.

12. Vorrichtung nach einem der Ansprüche 1 bis 11, **dadurch gekennzeichnet, dass** die beheizte Höhe f des Grundkörpers (1, 2) das 3 bis 10-fache und der unbeheizte Überstand g des Grundkörpers (1, 2) das 0- bis 7-fache des freien optischen Durchmessers a der optischen Komponente (61) beträgt.

13. Verfahren zur Herstellung von optischen Komponenten durch Heißformen, bei welchem ein Glasrohling (61) in einen Raum zwischen einem oberen Pressstempel (7) und einem unteren Pressstempel (3) eingebracht wird, wobei oberer (7) und unterer (3) Pressstempel modular aufgebaut sind und jeweils wenigstens einen Tragkörper (21, 23) und einem den Tragkörper (21, 23) aufnehmenden Grundkörper (1, 2) enthalten, wobei an jedem Tragkörper (21,23) eine Funktionsfläche (17, 19) ausgebildet ist, welche jeweils mit einer zugeordneten Heizeinrichtung (16, 18) direkt beheizt wird, **dadurch gekennzeichnet, dass** mittels der Heizeinrichtung (16, 18), welche den Tragkörper (21, 23) im Wesentlichen radial umgibt und deren Innendurchmesser (b) das 2,0-fache bis 5,0-fache des freien optischen Durchmessers a der optischen Komponente (61) beträgt, den Funktionsflächen (17, 19) die für die Umformung erforderliche Wärmemenge zugeführt wird, ohne dass der Grundkörper (1, 2) insgesamt auf die Temperatur der Funktionsflächen erhitzt wird.

14. Verfahren nach Anspruch 13, **dadurch gekennzeichnet, dass** die Temperatur der Funktionsflächen (17, 19) zu Beginn des Pressens in der Nähe der Glasübergangstemperatur T_{g} gehalten wird und der Glasrohling (61) mit einer höheren Temperatur in den Raum zwischen dem oberen Pressstempel (7) und dem unteren Pressstempel (3) eingebracht wird.

15. Verfahren nach Anspruch 13, **dadurch gekennzeichnet, dass** die Temperatur des Glasrohlings (61) zu Beginn des Pressens mindestens gleich der Glasübergangstemperatur Tg ist und die Funktionsflächen (17, 19) auf eine höhere Temperatur eingestellt sind.

16. Verfahren nach Anspruch 13, **dadurch gekennzeichnet, dass** der Glasrohling (61) zunächst mittels einer separaten Heizeinrichtung auf eine Temperatur T3 erwärmt wird, die zwischen der unteren Grenztemperatur des Formgebungsintervalls T1 und der oberen Grenztemperatur des Formgebungsintervalls T2 liegt, der vorgeheizte Glasrohling (61) mittels eines Transfersystems in den Raum zwischen dem oberen Pressstempel (7) und dem unteren Pressstempel (3) eingebracht und nach einer Liegezeit von 0 s bis 300 s umgeformt wird.

17. Verfahren nach einem der Ansprüche 14 bis 16, wobei optische Komponenten aus anorganischen Gläsern für präzisionsoptische und/oder bildgebende Systeme hergestellt werden.

## Claims

1. Device for producing optical components (61) by hot forming, into which a glass blank (61) can be introduced into a space between an upper press die (7) and a lower press die (3), the upper (7) and lower (3) press dies being modular in construction and each comprising at least one support body (21, 23) and a base body (1, 2) which receives the support body (21, 23) and has a larger cross-section (d) than the support body (21, 23), a functional surface (17, 19) being formed on each support body (21, 23), and the device, for directly heating the functional surfaces (17, 19), comprising a separate heating device (16, 18), respectively, which substantially radially surround the functional surfaces (17, 19) of the support bodies (21, 23), **characterised in that** the internal diameter (b) of the heating device (16, 18) is 2.0 to 5.0 times the free optical diameter a of the optical component (61).

2. Device according to claim 1, **characterised in that** at least one heating device (20) substantially radially surrounding the glass blank (61) is provided, which serves for heating the glass blank (61).

3. Device according to any one of the claims 1 or 2, **characterised in that** temperature measuring devices (29, 31) are provided in the support bodies (21, 23), in particular in the axis (5) close to the functional surfaces (17, 19).

4. Device according to any one of the claims 1 to 3, **characterised in that** the heating devices (16, 18, 20) can be controlled and heated separately from each other during the pressing cycle.

5. Device according to any one of the claims 1 to 4, **characterised in that** the diameter c of the support body (21, 23) is 1.0 to 2.5 times the free optical diameter a of the optical component (61).

6. Device according to any one of the claims 1 to 5, **characterised in that** the height h of the support body (21, 23) is 1.5 to 5.0 times the free optical diameter a of the optical component (61).

7. Device according to any one of the claims 1 to 6, **characterised in that** the overhang i of the support body (21, 23) over the base body (1, 2) is 0.5 to 2.5 times the free optical diameter a of the optical component (61) .

8. Device according to any one of the claims 1 to 7, **characterised in that** the overhang k of the heating device (16, 18) is -0.5 to 1.5 times the free optical diameter a of the optical component (61).

9. Device according to any one of the claims 1 to 8, **characterised in that** the height 1 of the heating device (16, 18) is 1.0 to 7.5 times the free optical diameter a of the optical component (61).

10. Device according to any one of the claims 1 to 9, **characterised in that** the diameter d of the front face (40, 42) of the base body (1, 2), in the transition region between the base body (1, 2) and the support body (21, 23), is 2 to 10 times the free optical diameter a of the lens (61).

11. Device according to any one of the claims 1 to 10, **characterised in that** the height e of the base body (1, 2) is 10 to 40 times the free optical diameter a of the optical component (61).

12. Device according to any one of the claims 1 to 11, **characterised in that** the heated height f of the base body (1, 2) is 3 to 10 times and the unheated overhang g of the base body (1, 2) is 0 to 7 times the free optical diameter a of the optical component (61).

13. Method for producing optical components by hot forming, in which a glass blank (61) is introduced into a space between an upper press die (7) and a lower press die (3), the upper (7) and lower (3) press dies being modular in construction and each comprising at least one support body (21, 23) and a base body (1, 2) which receives the support body (21, 23), a functional surface (17, 19), which is respectively heated directly with an associated heating device (16, 18), being formed on each support body (21, 23), **characterised in that** the functional surfaces (17, 19) are supplied with the quantity of heat required for forming by means of the heating device (16, 18) which substantially radially surrounds the support body (21, 23) and whose internal diameter (b) is 2.0 to 5.0 times the free optical diameter a of the optical component (61), without the base body (1, 2) being heated in its entirety to the temperature of the functional surfaces.

14. Method according to claim 13, **characterised in that** the temperature of the functional surfaces (17, 19), at the start of the pressing process, is kept close to the glass transition temperature Tg, and the glass blank (61) is introduced into the space between the upper press die (7) and the lower press die (3) with a higher temperature.

15. Method according to claim 13, **characterised in that** the temperature of the glass blank (61), at the start of the pressing process, is at least equal to the glass transition temperature Tg, and the functional surfaces (17, 19) are set to a higher temperature.

16. Method according to claim 13, **characterised in that** the glass blank (61) is first heated by means of a separate heating device to a temperature T3, which is between the lower limit temperature of the forming interval T1 and the upper limit temperature of the forming interval T2, the pre-heated glass blank (61) is introduced into the space between the upper press die (7) and the lower press die (3) by means of a transfer system, and is formed after a resting time of 0 s to 300 s.

17. Method according to any one of the claims 14 to 16, wherein optical components are produced from inorganic glasses for precision-optical and/or imaging systems.

## Revendications

1. Dispositif pour la fabrication de composants optiques (61) par moulage à chaud, dans lequel une ébauche en verre (61) est susceptible d'être introduite dans un espace entre un poinçon de presse supérieur (7) et un poinçon de presse inférieur (3), dans lesquels le poinçon de presse supérieur (7) et le poinçon de presse inférieur (3) sont réalisés de façon modulaire et contiennent chacun au moins un corps porteur (21, 23) et un corps de base (1, 2) qui reçoit le corps porteur (21, 23) et qui présente une section plus importante (d) que le corps porteur (21, 23), dans lequel une surface fonctionnelle (17, 19) est réalisée sur chaque corps porteur (21, 23), et le dispositif comprend respectivement un moyen de chauffage séparé (16, 18) pour chauffer directement les surfaces fonctionnelles (17, 19), lesquelles entourent sensiblement radialement les surfaces fonctionnelles (17, 19) des corps porteurs (21, 23),
**caractérisé en ce que** le diamètre intérieur (b) du moyen de chauffage (16, 18) est de 2,0 fois à 5,0 fois le diamètre optique libre a du composant optique (61).

2. Dispositif selon la revendication 1, **caractérisé en ce qu'**il est prévu au moins un moyen de chauffage (20) qui entoure sensiblement radialement l'ébauche en verre (61) et qui sert au chauffage de l'ébauche en verre (61).

3. Dispositif selon l'une des revendications 1 ou 2, **caractérisé en ce que** des dispositifs de mesure de température (29, 31) sont prévus dans les corps porteurs (21, 23), en particulier dans l'axe (5) à proximité des surfaces fonctionnelles (17, 19).

4. Dispositif selon l'une des revendications 1 à 3, **caractérisé en ce que** les moyens de chauffage (16, 18, 20) peuvent être pilotés et chauffés séparément les uns des autres pendant le cycle de pressage.

5. Dispositif selon l'une des revendications 1 à 4, **caractérisé en ce que** le diamètre c du corps porteur (21, 23) est de 1,0 à 2,5 fois le diamètre optique libre (a) du composant optique (61).

6. Dispositif selon l'une des revendications 1 à 5, **caractérisé en ce que** la hauteur h du corps porteur (21, 23) est de 1,5 à 5,0 fois le diamètre optique libre a du composant optique (61).

7. Dispositif selon l'une des revendications 1 à 6, **caractérisé en ce que** le dépassement i du corps porteur (21, 23) au-dessus du corps de base (1, 2) est de 0,5 à 2,5 fois le diamètre optique libre a du composant optique (61).

8. Dispositif selon l'une des revendications 1 à 7, **caractérisé en ce que** le dépassement k du moyen de chauffage (16, 18) est de 0,5 fois à 1,5 fois le diamètre optique libre a du composant optique (61).

9. Dispositif selon l'une des revendications 1 à 8, **caractérisé en ce que** la hauteur 1 du moyen de chauffage (16, 18) est de 1,0 à 7,5 fois le diamètre optique libre a du composant optique (61).

10. Dispositif selon l'une des revendications 1 à 9, **caractérisé en ce que** le diamètre d de la surface frontale (40, 42) du corps de base (1, 2) dans la zone de transition entre le corps de base (1,2) et le corps porteur (21, 23) est de 2 à 10 fois le diamètre optique
libre a de la lentille (61).

11. Dispositif selon l'une des revendications 1 à 10, **caractérisé en ce que** la hauteur e du corps de base (1, 2) est de 10 à 40 fois le diamètre optique libre a du composant optique (61).

12. Dispositif selon l'une des revendications 1 à 11, **caractérisé en ce que** la hauteur chauffée f du corps de base (1, 2) est de 3 à 10 fois, et le dépassement non chauffé g du corps de base (1, 2) est de 0 à 7 fois le diamètre optique libre a du composant optique (61).

13. Procédé pour la fabrication de composants optiques par moulage à chaud, dans lequel une ébauche en verre (61) est introduite dans un espace entre un poinçon de presse supérieur (7) et un poinçon de presse inférieur (3), dans lesquels le poinçon de presse supérieur (7) et le poinçon de presse inférieur (3) sont réalisés de façon modulaire et contiennent chacun au moins un corps porteur (21, 23) et un corps de base (1, 2) qui reçoit le corps porteur (21, 23), dans lequel sur chaque corps porteur (21, 23) est réalisée une surface fonctionnelle (17, 19) qui est respectivement chauffée directement avec un moyen de chauffage associé (16, 18), **caractérisé en ce que**, au moyen du moyen de chauffage (16, 18), qui entoure sensiblement radialement le corps porteur (21, 23) et dont le diamètre intérieur (b) est de 2,0 fois à 5,0 fois le diamètre optique libre a du composant optique (61), on apporte aux surfaces fonctionnelles (17, 19) la quantité de chaleur nécessaire pour la déformation, sans que le corps de base (1, 2) dans l'ensemble soit chauffé jusqu'à la température des surfaces fonctionnelles.

14. Procédé selon la revendication 13, **caractérisé en ce que** la température des surfaces fonctionnelles (17, 19) au commencement du pressage est maintenue au voisinage de la température de transition vitreuse Tg, et l'ébauche en verre (61) est introduite avec une température plus élevée dans l'espace entre le poinçon de presse supérieur (7) et le poinçon de presse inférieur (3).

15. Procédé selon la revendication 13, **caractérisé en ce que** la température de l'ébauche en verre (61) au commencement du pressage est au moins égale à la température de transition vitreuse Tg, et les surfaces fonctionnelles (17, 19) sont réglées à une température plus élevée.

16. Procédé selon la revendication 13, **caractérisé en ce que** l'ébauche en verre (61) est tout d'abord chauffée, au moyen d'un moyen de chauffage séparé, jusqu'à une température T3 qui est située entre la température limite inférieure de l'intervalle de mise en forme (T1) et la température limite supérieure de l'intervalle de mise en forme T2, l'ébauche en verre (61) préchauffée est introduite au moyen d'un système de transfert dans l'espace entre le poinçon de presse supérieur (7) et le poinçon de presse inférieur (3) et est mise en forme après un temps de repos de 0 s à 300 s.

17. Procédé selon l'une des revendications 14 à 16, dans lequel on fabrique des composants optiques en verre inorganique pour des systèmes optiques de précision ou des systèmes d'imagerie.
